(19) Europäisches Patentamt / European Patent Office / Office européen des brevets

(11) **EP 2 740 256 B1**

(12) **EUROPEAN PATENT SPECIFICATION**

(45) Date of publication and mention
of the grant of the patent:
**13.12.2017   Bulletin 2017/50**

(51) Int Cl.:
*H04M 1/725* *(2006.01)*    *G01C 21/16* *(2006.01)*
*G01C 21/20* *(2006.01)*    *G01C 22/00* *(2006.01)*

(21) Application number: **11870204.2**

(22) Date of filing: **04.08.2011**

(86) International application number:
**PCT/CN2011/078044**

(87) International publication number:
**WO 2013/016875 (07.02.2013 Gazette 2013/06)**

(54) **MOVING DIRECTION DETERMINATION WITH NOISY SIGNALS FROM INERTIAL NAVIGATION SYSTEMS ON MOBILE DEVICES**

BEWEGUNGSRICHTUNGSBESTIMMUNG MIT VERRAUSCHTEN SIGNALEN AUS TRÄGHEITSNAVIGATIONSSYSTEMEN AUF MOBILEN GERÄTEN

DÉTERMINATION DE LA DIRECTION DE DÉPLACEMENT D'UN USAGER AU MOYEN DE SIGNAUX DE BRUIT TRANSMIS PAR DES SYSTÈMES DE NAVIGATION PAR INERTIE, SUR DES DISPOSITIFS MOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.06.2014   Bulletin 2014/24**

(73) Proprietor: **Google LLC**
**Mountain View, CA 94043 (US)**

(72) Inventors:
• **YANG, Qingxuan**
**Beijing 100039 (CN)**
• **CHANG, Edward Y.**
**Palo Alto, California 94036 (US)**

(74) Representative: **Grant, David Michael et al**
**Marks & Clerk LLP**
**90 Long Acre**
**London WC2E 9RA (GB)**

(56) References cited:
CN-A- 1 717 573         CN-A- 102 053 775
JP-A- 2006 175 206      JP-A- 2007 325 295
JP-A- 2010 112 854      US-A1- 2003 191 582
US-A1- 2004 064 286     US-A1- 2008 214 360
US-A1- 2011 054 834

• FONG W T ET AL: "Methods for in-field user calibration of an inertial measurement unit without external equipment; Methods for in-field user calibration of an IMU without external equipment", MEASUREMENT SCIENCE AND TECHNOLOGY, IOP, BRISTOL, GB, vol. 19, no. 8, 1 August 2008 (2008-08-01) , page 85202, XP020144339, ISSN: 0957-0233

Description

BACKGROUND

Various mobile devices provide users with location based services (LBS). These include advanced mobile phones, PDAs, netbooks and tablet PCs. Being able to keep track of locations of such mobile devices can enhance a number of applications. Therefore, LBS is quickly becoming the next ubiquitous technology for a wide range of mobile applications, such as location positioning, location navigation, location-aware search, commerce, and advertisements, just to name a few. Current LBS technologies, however, suffer from several shortcomings. One issue is the lack of support for indoor positioning and navigation. While GPS signals may be used to provide an accurate outdoor position, this is typically not feasible in indoor environments and urban canyons. Also, GPS may require a long time to first fix, delaying the determination of the device's location. Another issue is that the power consumption by mobile devices when receiving GPS and WiFi signals can be too high to sustain continuous use.

Mobile devices such as those described above may employ an inertial navigation system (INS) to aid in detecting the device's location and direction of movement. INS has been employed in cars, planes and spaceships to calculate to obtain the vehicle's position. Developers of such vehicles can afford to use expensive, high-quality and well- calibrated INS' to obtain accurate motion signals. These technologies can support continuous and real-time position service, even when the external positioning signal is intermittent. On the contrary, microelectromechanical systems (MEMS)-based INS devices are commonly used in handheld mobile devices due to form factor and cost issues. MEMS INS devices need to be small and inexpensive because handheld mobile devices are generally small and inexpensive.

However, MEMS INS components may not be as accurate as INS devices deployed on high end vehicles. For example, a MEMS compass may have bias readings on the order of 20 to 30 degrees. MEMS-based accelerometers may suffer from axis misalignment, random noise, and zero drift. The noise and other errors associated with MEMS INS components may adversely affect location estimation. Therefore, many traditional techniques that rely on accurate readings to calculate velocity and position would likely fail on the INS of a handheld mobile device.

US publication US2004/064286 identifies a technique of performing dead reckoning navigation for persons on foot with improved accuracy by use of algorithms to distinguish between various motions and accurately track distance and direction travelled

US publication 2011/054834 refers to a method and apparatus for determining a person's compass orientation from data generated by sensors embedded within the device transported by such person. Based on events involving the person and/or the device, orientation delta can be determined.

SUMMARY

One aspect of the disclosure works with low-quality, noisy INS signals to extract a reliable moving direction by analyzing the shaking energy of a user. For instance, the direction of a user's movement is determined from the INS units on a mobile device when that mobile device is itself in motion relative to the motion of the user. More particularly, the mobile device may be non-stationary with respect to the user's movement. For instance, the mobile device does not need to be held steadily by, or mounted on, a body part of the user. Instead, the mobile device can itself be in motion, e.g., in a swinging hand, in a purse, or in a pocket. Shaking energy associated with this motion is used to determine the relative moving direction.

According to one aspect, a method of determining a direction of movement of a mobile device is provided. The method comprises receiving a plurality of acceleration readings associated with the mobile device; performing high pass filtering on the received acceleration readings to obtain a high frequency component; determining shaking energy from the high frequency component; and determining a primary direction of movement of the mobile device based on the determined shaking energy.

In one example, the method further comprises performing low pass filtering on the determined shaking energy to obtain smoothed data. Here, determining the primary direction of movement includes evaluating the smoothed data to identify a most likely direction of movement. In another example, the plurality of acceleration readings are generated using a gyroscope and a multi-axis accelerometer. In a further example, the method comprises calibrating the multi-axis accelerometer prior to receiving the plurality of acceleration readings. In one alternative, calibrating the multi-axis accelerometer includes averaging acceleration readings from the multi-axis accelerometer over a selected time window; determining biasing and scale factors; and performing a cost function process using the biasing and the scale factors.

In another example, the high frequency component is associated with swing energy generated by movement of the mobile device by a user. According to an aspect of the invention, the shaking energy is determined according to the following equation: $A_{energy} = A_{high} \times A_{high}^{T}$, where $A_{energy}$ is a vector representing the shaking energy, and

Ahigh is the high frequency component.

In yet another example, determining the primary direction of movement includes performing signal fusion to eliminate alternative directions of movement. In this case, performing the signal fusion may include evaluating wireless signals and map information associated with an indoor location.

And in another example, if determining the primary direction of movement indicates consistent vertical energy, the method further comprises identifying that the mobile device is changing levels.

According to another aspect of the disclosure, a device comprises memory configured to store mobile device data, and a processor coupled to the memory. The processor is configured to receive a plurality of acceleration readings associated with a mobile device and to store the acceleration readings in the memory as at least a portion of the mobile device data; perform high pass filtering on the received acceleration readings to obtain a high frequency component; determine shaking energy from the high frequency component; and determine a primary direction of movement of the mobile device based on the determined shaking energy.

In one example, the processor is further configured to perform low pass filtering on the determined shaking energy to obtain smoothed data. Here, the smoothed data is stored in the memory, and the processor is configured to determine the primary direction of movement by evaluating the smoothed data to identify a most likely direction of movement. In another example, the mobile device includes a multi-axis accelerometer, and the processor is further configured to calibrate the multi-axis accelerometer prior to receiving the plurality of acceleration readings. In this case, the processor may be configured to calibrate the multi-axis accelerometer by averaging acceleration readings from the multi-axis accelerometer over a selected time window, determining biasing and scale factors, and performing a cost function process using the biasing and the scale factors.

In a further example, the processor is configured to determine the primary direction of movement by performing signal fusion to eliminate alternative directions of movement. In this case, the primary direction of movement may be used to provide at least one of a mapping application or directed advertisements to a user of the mobile device. In another example, the processor is configured to perform the signal fusion by evaluating wireless signals and map information associated with an indoor location.

In one alternative, the processor and memory are part of the mobile device. In another alternative, at least one of the processor and memory are part of a remote server external to the mobile device.

And according to another aspect of the disclosure, a tangible, non-transitory computer program product stores computer readable instructions of a computer program. The instructions, when executed by a processor, cause the processor to perform a method of determining a direction of movement of a mobile device. The method comprises receiving a plurality of acceleration readings associated with the mobile device; performing high pass filtering on the received acceleration readings to obtain a high frequency component; determining shaking energy from the high frequency component; and determining a primary direction of movement of the mobile device based on the determined shaking energy.

## BRIEF DESCRIPTION OF THE DRAWINGS

FIG. 1 is a functional diagram of a system for use with aspects of the disclosure.

FIG. 2 illustrates measurements of acceleration in a test system.

FIG. 3 illustrates Allan Variance for a 3-axis accelerometer in an exemplary mobile device.

FIG. 4A is a conceptual diagram depicting a walking motion patter in accordance with aspects of the disclosure.

FIG. 4B is a flow diagram of a Vibration Energy Model process in accordance with aspects of the disclosure.

FIG. 5 illustrates results of a Vibration Energy Model process to detect orientation of a person in accordance with aspects of the disclosure.

FIGS. 6A-C illustrate measured accelerations of a pedestrian for three scenarios in accordance with aspects of the disclosure.

FIGS. 7A-C illustrate step detection of a pedestrian for three scenarios in accordance with aspects of the disclosure.

FIGS. 8A-C illustrates experimental results for determining the location of a pedestrian in accordance with aspects of the disclosure.

The aspects, features and advantages of the disclosure will be appreciated when considered with reference to the following description of embodiments and accompanying figures. The following description does not limit the present disclosure; rather, the scope of the disclosure is defined by the appended claims and equivalents.

**DETAILED DESCRIPTION**

One aspect of the disclosure pertains to a signal fusion architecture for indoor positioning and navigation. The system may employ one or more signal sources that can calibrate a moving object's location as an external reference or constraint. Such signal sources can be, e.g., GPS, WiFi, or location information of a nearby device transmitted over a point to point protocol. The constraint may include map and spatial layout information. The INS may include, but is not limited to, motion-sensing devices such as accelerometers, gyroscopes, and magnetic sensors. Information from the signal source(s) and the INS may be fused to perform accurate location positioning, both indoor and outdoor, and do so in a power-conserving way.

Conventional inexpensive internal navigation systems are notorious for producing errors due to misalignment, zero bias, and integration drift. A slightly inaccurate reading on linear acceleration (accelerometers) and angular velocity (gyroscopes) can be integrated into progressively (in time) large errors in velocity, which are compounded into greater errors in position. Even more challenging is the motion of a pedestrian. Unlike an airplane, car or other vehicle, pedestrian motion is generally "non-smooth". For instance, a mobile device can be carried by different people at different time and in different manners. It is virtually impossible to tell true signals from noise.

To minimize noise, one aspect employs non-intrusive calibration schemes. In one instance, a process, referred to herein as a "Vibration Energy Model" (VEM), may be used determine a pedestrian's moving direction based on the Equipartition theorem. The Equipartition theorem states that energy is shared equally among all degrees of freedom. The calibration process provides a foundation to obtain accurate sensor readings so as to conduct productive multimodal signal fusion to perform location positioning. In one scenario, particle filters may be employed for the fusion algorithm. Calibration makes the readings of each INS more accurate. The Vibration Energy Model uses the signals collected from the INS to compute motion direction in the "energy" domain to reduce errors being magnified, to thereby ensure that an error, small or large, calibrated or uncalibrated, will not be magnified too severely. Fusion combines results from the INS with external signals to further improve location prediction accuracy and efficiency.

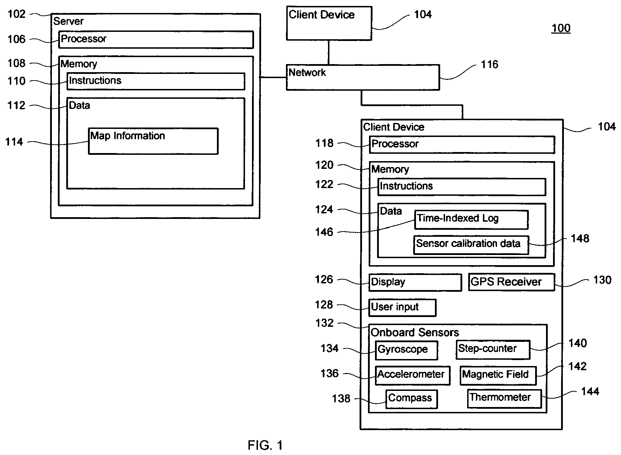

FIG. 1 illustrates an exemplary system 100 for use with aspects of the disclosure, including calibration of the mobile device's components. The exemplary system 100 may include a server 102 and one or more client devices 104. Server 102 may contain a processor 106, memory 108 and other components typically present in general purpose computers.

Memory 108 stores information accessible by processor 106, including instructions 110 that may be executed by the processor 106. Memory also includes data 112 that may be retrieved, manipulated or stored by the processor. The memory may be of any type capable of storing information accessible by the processor, such as a hard-drive, memory card, ROM, RAM, DVD, CD-ROM, write-capable, and read-only memories. The processor 106 may be any well-known processor, such as commercially available CPUs. Alternatively, the processor may be a dedicated controller such as an ASIC.

The instructions 110 may be any set of instructions to be executed directly (such as machine code) or indirectly (such as scripts) by the processor. In that regard, the terms "instructions," "steps" and "programs" may be used interchangeably herein. The instructions may be stored in object code format for direct processing by the processor, or in any other computer language including scripts or collections of independent source code modules that are interpreted on demand or compiled in advance. Functions, methods and routines of the instructions are explained in more detail below.

Data 112 may be retrieved, stored or modified by processor 106 in accordance with the instructions 110. For instance, although the system and method is not limited by any particular data structure, the data may be stored in computer registers, in a relational database as a table having a plurality of different fields and records, or XML documents. The data may also be formatted in any computer-readable format. Moreover, the data may comprise any information sufficient to identify the relevant information, such as numbers, descriptive text, proprietary codes, pointers, references to data stored in other memories (including other network locations) or information that is used by a function to calculate the relevant data.

According to one aspect, the data 112 may include map information 114. The map information 114 may be, for example, a collection of map of indoor areas, specifying locations of walls, entryways, rooms, and other attributes of the indoor space, such as wireless access points and signal strengths from the access points at various locations as measured by a particular power ratio (e.g., dBm). Such map information 114 may be used in connection with data from the client devices 104 to determine a location of each client device 104 and to provide navigational information to the client devices.

Although FIG. 1 functionally illustrates the processor and memory of server 102 as being within the same block, the processor and memory may actually comprise multiple processors and memories that may or may not be stored within the same physical housing. For example, some of the instructions and data may be stored on removable optical media and others within a read-only computer chip. Some or all of the instructions and data may be stored in a location physically remote from, yet still accessible by, the processor. Similarly, the processor may actually comprise a collection of processors which may or may not operate in parallel.

The server 102 may be at one node of a network 116 and capable of directly or indirectly communicating with other nodes of the network. For example, server 102 may comprise a web server that is capable of communicating with the client devices 104 via network 116 such that server 102 uses network 116 to transmit and display information to a user on a display of the client device 104. Server 102 may also comprise a plurality of computers, e.g., a load balanced server farm, that exchange information with different nodes of a network for the purpose of receiving, processing and transmitting data to the client devices. In this instance, the client devices will typically still be at different nodes of the network than any of the computers comprising server 102.

Each client device 104 may be configured similarly to the server 102, with a processor 118, memory 120, instructions 122, and data 124. Each client device 104 may be a personal computer, intended for use by a person and having all the internal components normally found in a personal computer such as a central processing unit (embodied by processor 118), display device 126 (for example, a monitor having a screen, a projector, a touch-screen, a small LCD screen, a television, or another device that is operable to display information processed by the processor), CD-ROM drive or other removable media, hard-drive, user input 128 (for example, a mouse, keyboard, touch-screen and/or microphone), speakers, modem or other network interface device, and all of the components used for connecting these elements to one another.

Although the client devices 104 may each comprise a personal computer, the systems and methods described herein may also be used in connection with mobile devices capable of wirelessly exchanging data with a server over a network such as the Internet. By way of example only, any client device 104 may be a wireless-enabled PDA, a portable navigation device, tablet PC, netbook, or a mobile phone capable of obtaining information wirelessly. The user may input information, for example, using user inputs 128, such as a small keyboard, a keypad, or a touch screen.

The server 102 and client devices 104 are capable of direct and indirect communication, such as over network 116. Although only a few devices are depicted in FIG. 1, it should be appreciated that a typical system can include a large number of connected devices, with each different device being at various nodes of the network 116. The network, and intervening nodes, may comprise various configurations and protocols including the Internet, World Wide Web, intranets, virtual private networks, wide area networks, local networks, private networks using communication protocols proprietary to one or more companies, Ethernet, WiFi (such as 802.11, 802.11b, g, n, or other such standards), and various combinations of the foregoing.

As shown in FIG. 1, the client devices 104 may also include geographic position component 130, to determine the geographic location. For example, each client device 104 may include a GPS receiver to determine the device's approximate latitude, longitude and altitude position. Thus, as the client device 104 changes locations, for example by being physically moved, the GPS receiver may determine a new current location. The geographic position component 130 may also comprise software for determining the position of the device based on other signals received at the client device 104, such as signals received at a mobile device's antenna(s) from one or more cellular towers.

Client device 104 may also include onboard sensors 132, such as orientation devices and other types of sensors. For example, the onboard sensors 132 may include a gyroscope 134, an accelerometer 136, a compass 138, a step-counter 140, a magnetic field detector 142, and a temperature sensor such as thermometer 144. The onboard sensors may be used (e.g., in combination with software) to determine a location of the client device 104 in an indoor space. For example, orientation devices may indicate a direction in which the device is oriented. The client device 104 may use data from the gyroscope 134 and input from the accelerometer 136 to determine the client device's pitch, yaw or roll (or changes thereto) relative to the direction of gravity or a plane perpendicular thereto.

In that regard, it will be understood that a client device's provision of orientation data as set forth herein may be provided automatically to the client device. Alternatively or additionally, such orientation data or other data from the onboard sensors 130 may be transmitted to the server 102 or to another device for further processing or logging. No personal data need be transmitted. Privacy protections are provided for the user data including, for example, anonymization of personally identifiable information, aggregation of data, filtering of sensitive information, encryption, hashing or filtering of sensitive information to remove personal attributes, time limitations on storage of information, or limitations on data use or sharing. The user may opt out of the use of any such sensitive information.

The orientation data received from the onboard sensors 130 may be used in various ways. For example, gyroscope 134 or accelerometer 136 may be used as a pedometer by running an average of the acceleration values to identify which direction is down (towards the Earth). A step counter may determine a step has been taken each time movement in a downward direction is greater than an empirically-determined threshold. The distance of each step may be approximated by using an approximate stride length or speed of a person.

The onboard sensors 130 of the client device 104 may be used to determine movement of the user as the user moves about an indoor space. For example, the gyroscope 134 may indicate a rate of angular change (e.g., how fast the user is turning). This data may be combined with data from the accelerometer 136 or step-counter 140, for example, to determine a location of the client device at a given time.

The onboard sensors 130 may also provide a general measurement of location. However, measurements from the gyroscope or other sensors may be subject to drift, and may therefore become less accurate over time. Accordingly, the onboard sensor measurements may be periodically compared to measurements and location estimations obtained by other means. For example, measurements and location estimations obtained using wireless network data or other information as discussed herein may be used to calibrate the gyroscope or other inertial navigation components, or to refine location estimates such as when a person is located in an indoor environment.

Data 124 of client device 104 may store a time-indexed log 146 of measurements from one or more onboard sensors 130 and wireless network access point identifiers. For example, the log may include a timestamp, orientation and compass measurements, wireless network access point identifiers (MAC address and/or SSIDs), and signal strengths. Again, this data need not include any payload information, but only that necessary to identify a wireless network access point (or other wireless network identifier) and its associated signal strength. For every unit of time along the route, the client device may record a log entry for that location. For example, a log entry may be recorded periodically, such as every 0.1 seconds. The log data may be transmitted to the server 102 as it is collected or the user may elect to transmit the data once the user has finished walking through the indoor space.

The data 124 of the client device 104 may also store sensor calibration information 148. According to some aspects, such calibration information 148 may be determined using other functions and/or capabilities of the client device 180 and updated periodically. For example, as will be discussed in further detail below, information regarding user or device movement may be used to calibrate one or more onboard sensors such as the gyroscope 132 or the accelerometer 136.

Using INS devices to localize a person can be broadly classified into two categories according to how INS units are placed. One implements an indoor pedestrian-localization prototype using a foot-mounted inertial unit. Another assumes an INS unit to be wore on the waist. Both schemes make sure that the motion patterns of their INS units are predictable. In the foot-mounting case, when a foot touches the floor, the INS unit receives a clean signal to start a stride, and this reset is done periodically. In the waist-wearing case, the INS unit is expected to move steadily. However, INS units embedded in a mobile phone cannot enjoy these advantages. A mobile phone can be worn on the waist, placed in a purse, put in a pocket, or swung in a hand.

An on-phone pedometer may use an accelerometer. Though the estimated steps may not be very reliable, it may provide a good estimate on travel distance, but without orientation information. A compass may be used to estimate the user's orientation; however, a reliable reading requires the user to hold the phone in such a way that the orientation of the phone always agrees with that of the user. Also, compasses on mobile phone may be very inaccurate, e.g., due to severe inference from the mobile phones' other electronic units. Certain techniques may be used to address such problems, but may only work when the orientation of the phone does not change too frequently. Such existing methods that make use of INS may not provide an effective strategy to combat the progressive errors introduced by various INS noises.

High-end sensor calibration often requires an expensive mechanical platform by which orientation and rotation speed can be precisely controlled. The sensor outputs are then compared with external calibration values calculated by known parameters of the mechanical platform. This kind of high-cost and intrusive approach is not suitable for calibrating INS units on mobile phones or other handheld user devices. To address mobile-phone INS calibration, inexpensive equipment such as optical trackers, have been proposed. However, it is not feasible to ask the purchaser of a mobile phone or other handheld device to also purchase such a calibration station, or travel to a shop to periodically calibrate their device. In contrast, one aspect of the present disclosure provides for calibration that can be performed effectively with minimal effort required by the user of the handheld mobile device.

As the MEMS inertial sensors embedded inside mobile phones have a large noise floor, it is important to calibrate them before they are used for accurate localization. There are two opportunities in which the inertial units in a mobile phone may be calibrated: at the manufacturer and at home. The calibration process at the manufacturer can rely on external, expensive devices. However, once a user has purchased a mobile phone or other such portable device, the calibration process at home is desirably a one time, non-intrusive, and should not rely on external devices such as a turn table.

One device commonly found in mobile client devices is an accelerometer. As with other components used for inertial navigation, the accelerometer may require calibration as it may suffer from a large noise floor. A simple experiment was performed to help to analyze and partition the noise floor with the aim of modeling it. In particular, two smartphones were placed side-by-side, first lying down on a desk, and then standing against a wall. The most sensitive axis of a 3-axis accelerometer is that which is closest to being parallel with the pull of gravity. The aforementioned two placements allow for isolation of the axis desired to be the most sensitive, but do not require the smartphones or any axis of the accelerometers to be precisely parallel or perpendicular to the horizontal.

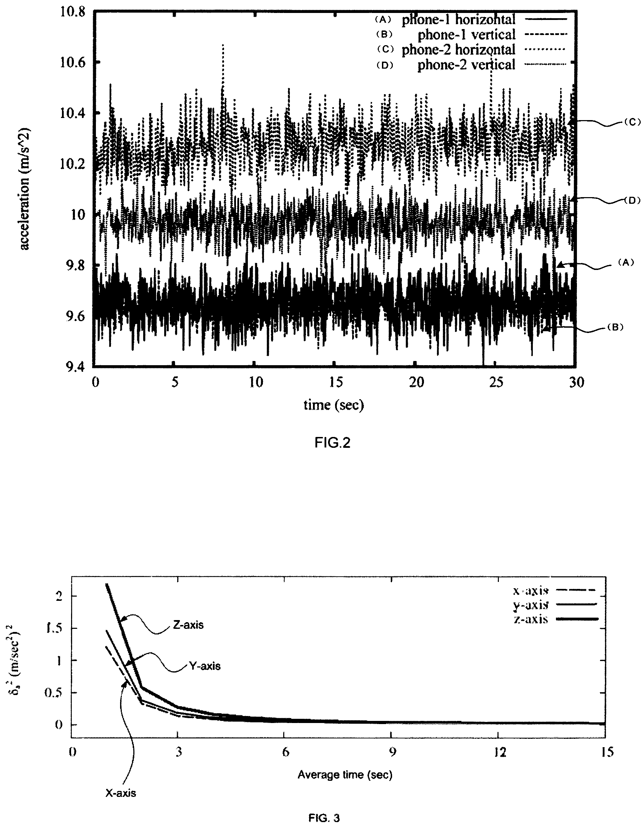

In each placement of the experiment, the smartphone remained stationary for at least 30 seconds. The magnitude of the acceleration measured during this time is shown in FIG 2. Three types of error may be observed: random error, bias error and scale factor error. Although both phones were stationary, the magnitudes of the acceleration measurements still jittered quite noticeably, which illustrates the existence of random noise. When the two phones were placed at the two different positions, FIG. 2 indicates that both suffered from bias and scale factor error, because the magnitudes of the accelerations are different both between the phones and between their positions. Firstly, the magnitude of the acceleration measured by the second phone is at least $0.2\text{m/s}^2$ larger than that of the first phone. Secondly, the same phone measured different magnitudes of accelerations when the most sensitive axis with respect to the gravity was changed. Thirdly, the magnitudes of the accelerations measured on the two smartphones both deviated from the acceleration of gravity ($9.8015\text{m/s}^2$). This result strongly indicates that each phone should be calibrated individually. The three accelerometer errors discussed above are modeled in equation 1 below, in which the 3-axis accelerometer reading $a_{raw}$ is calibrated to $a_c$ (the subscript c stands for calibrated), where $a_{raw}$ and $a_c$ are 3-tuples.

$$a_c = S(a_{raw} - b - V) \qquad\qquad \text{(Eq. 1)}$$

where the scale matrix (S) is:

$$S = \begin{pmatrix} S_x & 0 & 0 \\ 0 & S_y & 0 \\ 0 & 0 & S_z \end{pmatrix},$$

and the bias vector (b) is:

$$b = (b_x\; b_y\; b_z)^\top,$$

and V denotes the random error.

An important property used for acceleration calibration is that the magnitude of the acceleration measured while the phones or other devices are stationary must equal that of gravity. Intuitively, if an accelerometer does not introduce any error, the acceleration measured in a stationary position (represented as a triple) should form a sphere having a radius with the magnitude of the acceleration of gravity. The biases and scale factors stretch the sphere into an ill-formed ellipse, and the random errors perturb the ellipse. An aim of the accelerometer calibration process is to determine the parameters in the error model to transform the ellipse back into the desired sphere.

Because the random error V is not a constant value and it differs from time to time, an efficient method to eliminate the randomness involves averaging the accelerometer readings during a selected time window. The Allan Variance may be employed to determine how long the time window should be. The Allan Variance was first proposed by David Allan to measure oscillator instability in the time domain, and it is also an efficient method for representing random noise as a function of average time. Here, the average time means the span of time during which samples are averaged together. The Allan Variance may be represented by the following equation:

$$\sigma_y^2(T) = \frac{1}{2}\sum_{i=1}^{N}[y(i,T) - y(i-1,T)] \qquad\qquad \text{(Eq. 2)}$$

where $y(i, T)$ is the $i^{th}$ average, and each average spans T seconds.

In one test, stationary accelerometer signals were collected for 160 minutes. The average time T varied from 1 second (N = 9599) to 400 seconds (N = 23). FIG. 3 illustrates the Allan Variance when the averaging time varies from 1 to 15 seconds. As shown, the Allan Variance of the z-axis of the accelerometer embedded in the test mobile phone takes the longest time interval of 6 seconds to converge. This implies that the calibration of the test phone requires the phone to be stationary for at least 6 seconds to obtain a stable average value to eliminate the random noise so that the average values will not change significantly in the any of the following 6 seconds intervals.

A longer average time than 6 seconds would likely reduce the Allan Variance slightly; however, for in-field calibration the calibration time is desirably as short as possible. Thus approximately 6 seconds (e.g., plus or minus 2 seconds, at least 3 seconds, or less than 10 seconds) may be chosen as an appropriate value. This random noise removal step is in contrast to one that arbitrarily chooses a one second interval as the length of averaging time window. The measured Allan Variance indicates that the average of accelerometer signals spanning only one second differs from each second to the next.

After random noise has been removed by averaging acceleration readings spanning at least 6 seconds, the next step of calibration is to determine biases and scale factors, namely the six parameters: Sx, Sy, Sz, bx, by, and bz.

As there are six parameters, it is prudent to have enough data to make an over-determined system. In one test, two boxes were employed to help fix the phone in different attitudes to obtain stable acceleration measures. The two boxes were put on a flat surface, leaving some space between them. Then a phone was placed against the face of one box, and the other box was used to stop the phone from gliding. The two boxes keep the phone in a stationary position for at least 6 seconds. The average 3-axis accelerometer signal spanning 6 seconds forms a calibration data set. After this, the attitude of the phone was changed by either rotating it or enlarging/reducing the space between the two boxes. Given n sets, the calibration is to compute (Sx, Sy, Sz, bx, by, bz) using a cost function according to the following:

$$f(S, b) = \sum_{i=1}^{n} ( \| a_{ci} \| - \| a_g \| )^2 \qquad \text{(Eq. 3)}$$

The cost function f(S, b) process may be minimized using a combination of the Nelder-Mead method and gradient descent. In one example, gradient descent was included because the Nelder-Mead method sometimes missed the global minimum when initialized with different values. The result of the Nelder-Mead method was used as the initial start value to the gradient descent method. The result of the gradient decent was used to seed the next round of Nelder-Mead. After several iterations, the minimization procedure is completed.

According to one aspect, after the accelerometer(s) of the mobile device has been calibrated, one can begin to track a pedestrian via inertial navigation. Pedestrian tracking involves tracking the direction of the pedestrian's movement, and tracking the distance of the pedestrian from a particular point. To this end, a set of two-tuples is desirably maintained in the form of (direction, distance). This data may be stored, for instance, in time-indexed log 146 of the client device (see FIG 1). Direction is represented as the angle between the heading of the pedestrian and a particular compass direction. For instance, the compass direction may be South, e.g., south is regarded as 0°, east is 90°, west is -90° and north is 180° (or -180°). Distance may be measured as the number of meters the pedestrian has walked since the last tracking point. In one example, the set of two-tuples are sent to the fusion algorithm at the rate of 1Hz. Direction is derived through the Vibration Energy Model process, and the distance is computed by multiplying the number of steps by the length of the step, both of which will be described below.

When humans walk, they very rarely swing their arms perpendicular to the direction that they are walking. For example, a pedestrian who walks in a southerly to northerly direction may have her arms swing parallel to the direction that she walks, instead of along the easterly or westerly directions. If a pedestrian holds something such as a mobile phone or PDA and stops swinging her arms, she may swing her body parallel to the direction she is walking in order to keep her balance. As an extreme case, even if a pedestrian wants to walk crosswise, like a crab, she will still tend to swing her body like the crab, in particular in a manner parallel to the walking orientation. This phenomenon can be explained theoretically as though a pedestrian stores energy for walking while swinging her arms. The swing is regarded as energy storage. Following the Equipartition theorem, pedestrians alternately consume/store energy between walking/swinging. Therefore, the direction of a swinging arm can be understood to also be that of the pedestrian. One aspect of the disclosure uses the signals of swinging energy, shaking energy or other vibration, referred collectively herein as "vibrational kinetic energy" or "vibrational energy", as a hint to the direction of user motion.

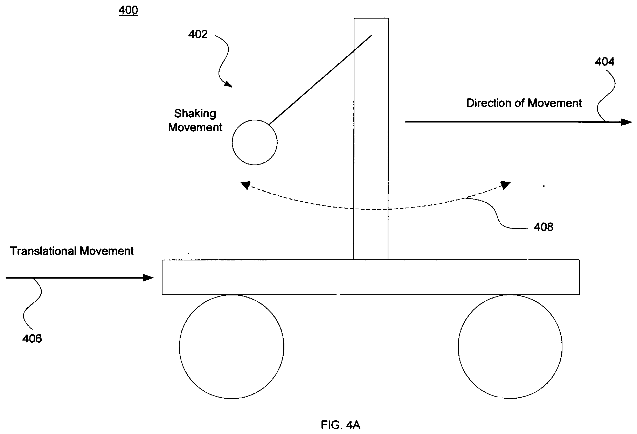

A conceptual diagram 400 depicting a walking motion pattern is shown in FIG. 4A. Here, a pedestrian may be modeled as a unit 402. The pedestrian's walking motion can be evaluated as two major parts. One is translational movement and the other is shaking movement. These two movements tend to share the energy equally in one stride (or one motion period) according to the Equipartition theorem. As shown in FIG. 4A, these two movements are generally along a direction of movement 404. Translational movement is shown linearly via arrow 406 along the direction of movement 404. In contrast, shaking movement may occur in an arcuate path 408 along the direction of movement 404. The system infers information about the translational movement by measuring the shaking movement.

The process begins with determining accelerations in an absolute reference frame (denoted as the vector $A_a = (A_{ax}, A_{ay}, A_{az})^T$) to derive the direction of the pedestrian's movement, namely, the angle between the direction of movement and a given orientation, such as south. The accelerations may be determined using a gyroscope and a 3-axis accelerometer. In this example for the absolute reference frame, the X axis is horizontal and points to the south, the Y axis is vertical and points to the east and the Z axis points towards the ground. However, the accelerometer inside the mobile phone or other portable device provides the acceleration in the device's reference system, for instance where all the axes are relative to the front face of the screen.

A magnetic field sensor, which measures the ambient magnetic field, and the acceleration of gravity measured by the accelerometer, may both be used to determine an initial rotation matrix that converts the mobile device's reference system to the absolute reference system. During a tracking operation, gyroscopic measurements are adopted to update the rotation matrix. The direction of the pedestrian's motion is determined in one embodiment as follows.

$$A_{high} = HPF(A_a) \qquad (Eq.\ 4)$$

According to equation 4, vector $A_a$ is fed to a high pass filter (HPF) to obtain the high frequency component, $A_{high}$, which retains the swing movement. The information along the z-axis of the absolute reference frame may be dropped because the system focuses on determining the direction of the pedestrian, which is along a 2-dimensional (e.g., XY) plane.

$$A_{energy} = A_{high} \times A_{high}^{T} \qquad (Eq.\ 5)$$

According to this equation, $A_{energy}$ is a 2x2 symmetric matrix, which can be represented as $\begin{pmatrix} a^2 & ab \\ ab & b^2 \end{pmatrix}$. Here, energy refers to the stored elastic potential energy, which is proportional to acceleration. In one embodiment, a and b may be obtained from accelerometer readings and an attitude signal. Here, a is indicative of acceleration and b is indicative of error.

$$A_{LowEnergy} = LPF(A_{energy}) \qquad (Eq.\ 6)$$

Here, a linear low pass filter is used to extract the low frequency component of $A_{energy}$ for smoothing purposes. $A_{LowEnergy}$ remains symmetric because the low pass filter is linear, and the elements of $A_{LowEnergy}$ can thus be represented as:

$$A_{LowEnergy} = \begin{pmatrix} LPF(a^2) & LPF(ab) \\ LPF(ab) & LPF(b^2) \end{pmatrix} \qquad (Eq.\ 7)$$

The projection of $A_{LowEnergy}$ to the movement direction is the largest among all the directions. In other words, the a that maximizes $f(a) = LPF((a\cos\alpha + b\sin\alpha)^2)$ is the angle of the pedestrian's direction of movement. Using $\dfrac{df(\alpha)}{d\alpha} = 0$, one can derive that:

$$\alpha = \frac{1}{2}\arctan\frac{2LPF(ab)}{LPF(a^2) - LPF(b^2)} + k \times 90°, \quad k=0,1,2,3 \qquad (Eq.\ 8)$$

Two of the a actually minimize f(a), which can be checked by substituting these values of a back into f(a). The remaining two a values are represent the possible directions of motion, as the system may only be able to detect the direction of swinging. This swinging direction is parallel to the direction of walking, but may be opposite to it. Signal fusion may be employed using information from both WiFi signals and map information to determine the direction of motion. The information associated with the above processing may be stored, for instance, in the time-indexed log 146 and/or the sensor calibration data 148 of the mobile device's memory (see FIG. 1). In one example, the mobile client device may store the information, perform accelerometer calibration and Vibration Energy Model processing. Alternatively, in another example, some or all of the information may be transmitted to the server 102 for analysis, processing and/or storage. In a further example, the mobile client device and the server 102 may share storage, analysis and processing operations. In the event that certain information is sent to the server 102 for processing, no personal data need be transmitted, and privacy protections are provided for the user data including, for example, anonymization of personally identifiable information, aggregation of data, filtering of sensitive information, encryption, hashing or filtering of sensitive information to remove personal attributes, time limitations on storage of information, or limitations on data use or sharing. The user may opt out of the use of any such sensitive information.

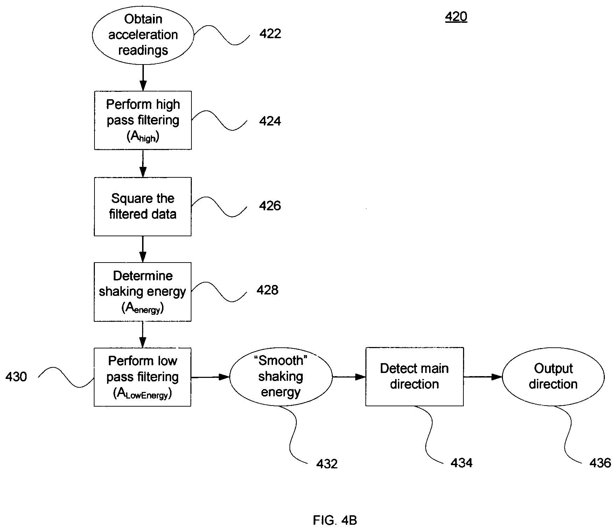

FIG. 4B illustrates an example 420 of the Vibration Energy Model process in accordance with an aspect of the disclosure. Initially, acceleration readings are obtained (e.g., retrieved from memory 120) or otherwise received in block 422. The accelerations are desirably computed using a gyroscope and a 3-axis accelerometer. The accelerometer may undergo a calibration process as described above prior to the operation at block 422. Next, as shown in block 424, high pass filtering is performed to obtain high frequency component $A_{high}$. As discussed above, $A_{high}$ retains the swing movement generated as the pedestrian walks with the mobile device in his or her hand. The filtered data may be squared in block 426 to be proportional to the energy. Next, the shaking energy ($A_{energy}$) is determined, as set forth in equation 5 above. Once the shaking energy is obtained, it is smoothed in block 430 by performing a low pass filtering operation, resulting in "smooth" shaking energy (block 432). Next, the primary (main) direction of movement is determined at block 434. The resultant direction is output, for example to be used by the signal-fusion architecture to determine a location of an indoor pedestrian, namely the user of the mobile device. Given this, the location and primary direction of movement may be used to provide at least one of a mapping application, location services or directed advertisements to a user of the mobile device. While shown in a particle order, certain operations of example 420 may be performed in a different order or simultaneously. Furthermore, additional operations may be added or omitted from the process.

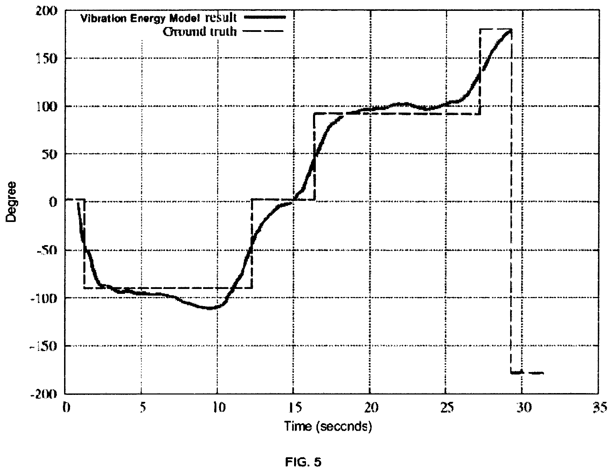

FIG. 5 illustrates one example in which the above-described Vibration Energy Model process is used to detect the orientation (direction) of a pedestrian. In this example, assume a pedestrian holds a portable device such as a mobile phone. As she walks, the pedestrian swings her arms, going around a block, first heading west, and then south, east and north. This figure shows the direction of the pedestrian detected by the Vibration Energy Model system (the solid line), which closely matches the ground truth (the broken line).

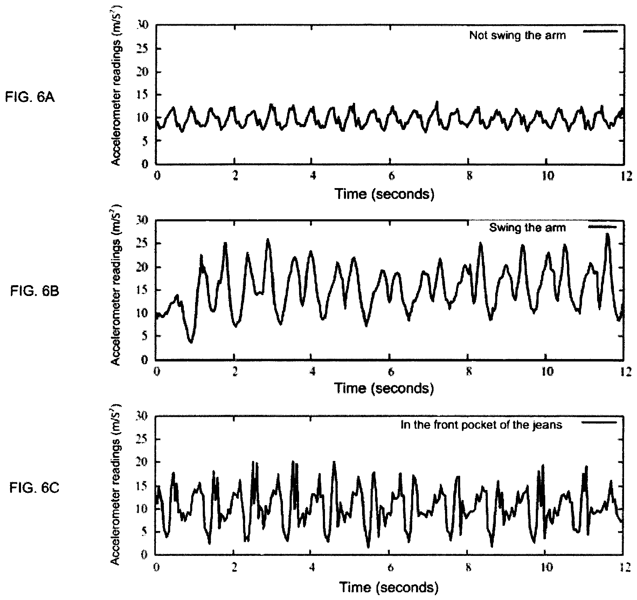

While pedestrians walk on level ground, measured accelerations show evident rhythms as can be seen in FIGS. 6A-C. Here, rhythms exist when mobile phone equipped with accelerometer is in different positions are evaluated. For instance, FIG. 6A presents walking data when the client device is held in a pedestrian's hand, where the mobile device is swung as the user walks. FIG. 6B presents data where the client device is held in the pedestrian's hand while they hold the phone steady in front of them. And FIG. 6C presents data where the client device is placed in a front pocket of the pedestrian's pants. Only the magnitudes of the accelerations are shown in these figures. The sample rate of the accelerometer is about 30 Hz.

As the walking of pedestrians is a cyclical movement composed of heel-striking and toe-off, each placement of the accelerometer shows a rhythm. However, the rhythms have different presentations depending on where the client device is located. For instance, when the pedestrian holds the phone in her hand as her arms swing for balance (FIG. 6A), the acceleration measurements show one spike corresponding to each step, while there are two close spikes corresponding to each step in the other scenarios (6B and 6C). The difference in the number of spikes is because some people generally place the toe back on the ground and then the heel, which will generate two spikes, but if the phone is held in the hand of a swinging arm, the impact of the toe-heel back to the ground is not evident.

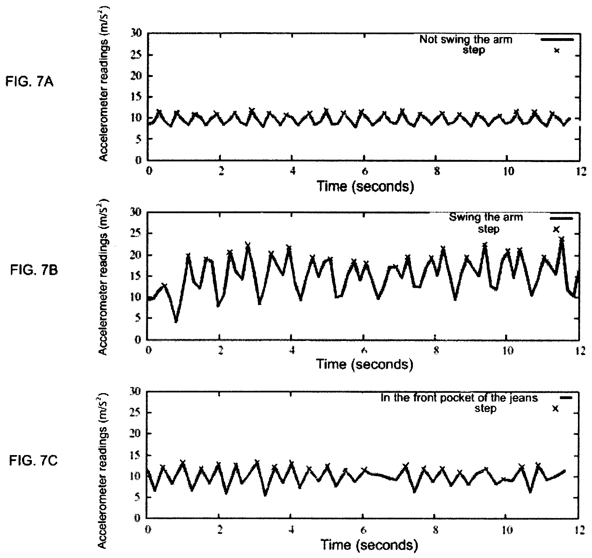

A smooth-spike algorithm may be used to detect each step no matter how the pedestrian holds the phone. For instance, each of the N samples of the raw accelerometer readings may first be calibrated using Equation 1 set forth above. Besides eliminating the biases and scale factors error as well as reducing random error, the calibration also integrates two close spikes into just one spike, and thus the calibration is called "smooth". The smoothed accelerations then form a sequence (denoted as $a_{si}$) and are sent to the spike detect algorithm. If $a_{si}$ is larger than $a_{si-1}$ and $a_{si+1}$, then $a_{si}$ is regarded as a spike and is marked as a single step. In one experiment, N = 5 provided suitable results, as nearly no useful spikes were smoothed, while the two spikes caused by toe-heel movement were integrated as one. Although the smooth-spike method introduces lag by averaging only after N-samples have been taken, N = 5 and a 30 Hz sample rate makes this lag around 16 second, which is acceptable. FIGS. 7A-C show examples of step detection results of three different phone placements. In the above-described experiment, only one step is missed when the phone is in the front pocket of the jeans. The step size may be as described by Constandache et al., "Towards Mobile Phone Localization Without War-Driving," Proceedings of INFOCOM 2010, pp. 1-9. The detection of movement from one floor to another may be separated from predicting positions on a given, fixed floor. For instance, to detect a floor-change, the Vibration Energy Model process is used to track a user's movement between floors. If the Vibration Energy Model process detects consistent vertical energy, it may be interpreted that the user is changing levels (e.g., floors in a building), such as by moving on a staircase, escalator or elevator. Once the user has reached the desired floor, which may be indicated when vertical energy has subsidized for a empirical chosen time T, the floor change may be considered complete. A landmark on that floor can provide confirmation.

To track locations on a given floor, a particle filter process may be employed as the fusion algorithm. Particle filters are usually used to estimate Bayesian models in which latent variables are connected in a Markov chain, where the state space of the latent variables is continuous (rather than discrete), and not sufficiently restricted to make exact inferences tractable. Under the Markov assumption, later events are influenced by prior ones, allowing a Bayesian filter to track the state of a dynamic system through time.

However, particle filters are known to be computationally intensive as the state space of latent variables grows, resulting in a huge number of particles. To make the framework computational feasible on mobile devices such as cell phones, floor plans and WiFi landmarks are desirably employed as constrains to restrict the number of particles. In a localization framework, a particle has a state $s_t$ at time t, in which:

$$s_t = (x_t, y_t, \theta_t, landmark_t) \qquad\qquad (Eq.\ 9)$$

Here, $(x_t, y_t)$ and $\theta_t$ are the horizontal position and the heading direction of the user, respectively, and $landmark_t$ is a special polygon area where one may obtain strong indicators from the map, WiFi and INS units and is the presumed location of the user. Note that $landmark_t$ may be null if the user is not near any of the landmarks. Since a determination regarding which floor the user is on is performed separately using the Vibration Energy Model process, it is not necessary to store the altitude in the $s_t$ state variable. The input to the particle filter desirably includes the floor plan, the readings from INS sources, WiFi signal readings, and a WiFi signal heat-map from a site survey. The output is a winning particle, $s_t$, corresponding to a user's indoor location.

Locating pedestrians with a calibrated inertial navigation system aims at generating the current position of the pedestrians. The system may evaluate both the correctness of the INS tracking and the effectiveness of particle filters. A set of experiments has been used with different routines and different placements of the mobile phone to evaluate a calibrated inertial navigation system as discussed above. In one example, two sets of different routines are used in the experiments, namely, a 5m × 14.5m rectangle around which the pedestrian walks clockwise and anticlockwise (denoted as "clockwise-rect" and "anticlockwise-rect" respectively). In one scenario, the mobile phone (or other device) is positioned in three different placements, namely, a static hand, a swinging hand, and the front pocket of the wearer's pants. Here, the static hand presents a scenario in which a pedestrian tries to watch the display screen of the mobile device while walking. In one test, two people, one female and one male, were asked to participate for a total of 12 sets of experiment data, which encompassed the two different routines with the three different placements of the mobile phones.

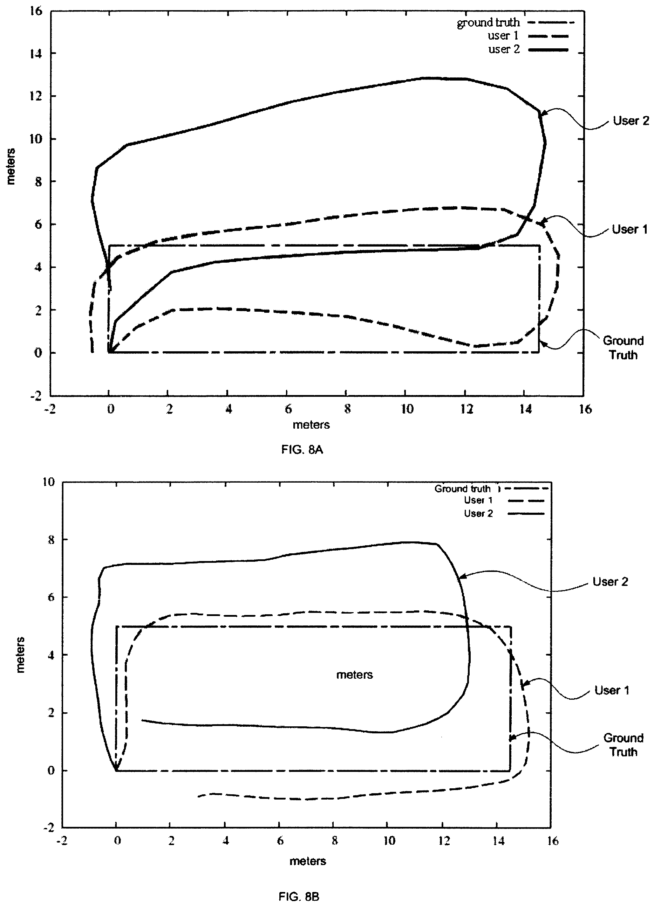

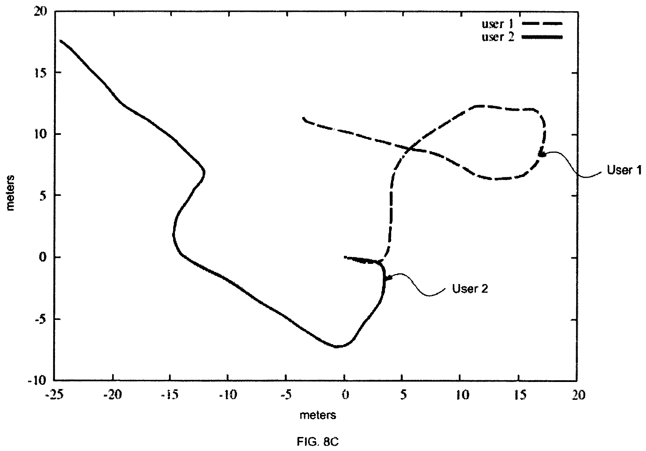

The trace is plotted with the positions generated by the calibrated inertial navigation system at the rate of 1Hz, with results presented in FIGS. 8A-C. FIG. 8A illustrates test results in which the two pedestrians walked counterclockwise ("anticlockwise-rect") with the mobile phone in their swinging arms. FIG. 8B illustrates test results in which the two pedestrians walked clockwise ("clockwise-rect") with the phone in their static (non-swinging) hands. As shown, the Vibration Energy Model process produces effective results when the mobile phones are in either the static hand or the swinging hand. For both scenarios, the swing energy is significant and can be used to derive the directions of the pedestrians. In an area of 72.5m$^2$, after walking 39 meters, the largest drift of the distance was determined to be about 3 meters. However, as shown in FIG. 8C, when the mobile device was placed in the front pocket of the pedestrians' pants, the process was less effective. This is because the swinging amplitude of the mobile device was not sufficient to distinguish the direction of the pedestrian. However, the particle filters, which involve the WiFi signal and indoor map to in determining the location of the user, are able to make the tracking even more effective, complementing the Vibration Energy Model calibration process when there is little to no swinging of the mobile device.

In the indoor environment, the system may rely primarily on WiFi signals, using the inertial navigation system(s) fill the gap between any two successive WiFi signals. Thus, the system may increase the intervals between activation of an on-board GPS device. As the interval of GPS activated increases, the energy consumption of the mobile device decreases. Similarly, the increase of the interval at which WiFi is invoked to determine the location of the mobile device also decreases the energy consumption of the system. In one scenario, the INS components may always be on for the aim of rotating screen automatically, and thus the employment of the INS does not add extra energy consumption. Therefore, the system is able to save energy consumption by reducing reliance on GPS and WiFi signals.

As these and other variations and combinations of the features discussed above can be utilized without departing from the subject matter defined by the claims, the foregoing description of the embodiments should be taken by way of illustration rather than by way of limitation of the subject matter defined by the claims. It will also be understood that the provision of the examples disclosed herein (as well as clauses phrased as "such as," "including" and the like) should not be interpreted as limiting the claimed subject matter to the specific examples; rather, the examples are intended to illustrate only one of many possible embodiments. Further, the same reference numbers in different drawings may identify the same or similar elements.

## INDUSTRIAL APPLICABILITY

The present invention enjoys wide industrial applicability including, but not limited to, mobile device use and operation.

## Claims

**1.** A method of determining a direction of movement of a user of a mobile device, the method comprising:

receiving a plurality of acceleration readings associated with the mobile device;
performing high pass filtering on the received acceleration readings to obtain a high frequency component;
determining shaking energy associated with a swing motion of the mobile device from the high frequency component according to the following equation:

$$A_{energy} = A_{high} \times A^{T}_{high},$$

where $A_{energy}$ is a matrix representing the shaking energy, and $A_{high}$ is the high frequency component and $A^{T}_{high}$ is a transpose vector of the high frequency component, the swing motion of the mobile device being relative to a direction in which the user is travelling; and
determining, based on the determined shaking energy, the direction in which the user is travelling as an angle relative to a given orientation.

2. The method of claim 1, further comprising performing low pass filtering on the determined shaking energy to obtain smoothed data, wherein determining the direction in which the user is travelling includes evaluating the smoothed data to identify a most likely direction of movement.

3. The method of any one of claims 1-2, wherein the plurality of acceleration readings are generated using a gyroscope and a multi-axis accelerometer.

4. The method of any one of claim 1-3, further comprising calibrating the multi-axis accelerometer prior to receiving the plurality of acceleration readings.

5. The method of claim 4, wherein calibrating the multi-axis accelerometer includes:

averaging acceleration readings from the multi-axis accelerometer over a selected time window; and
computing biasing and scale factors by performing a cost function process using the average acceleration readings.

6. The method of any one of claims 1-5, wherein the high frequency component is associated with swing energy generated by movement of the mobile device by the user.

7. The method of any one of claims 1-6, wherein $A_{energy}$ is a 2X2 symmetric matrix , and $A_{high}$ is a vector representing the high frequency component of the received acceleration readings along an x and y axes.

8. The method of any one of claims 1-7, wherein determining the direction in which the user is travelling includes performing signal fusion using one or more signals generated by the mobile device and one or more external signals to eliminate alternative directions of movement.

9. A device, comprising:

memory configured to store mobile device data; and
a processor coupled to the memory, the processor being configured to:

receive a plurality of acceleration readings associated with a mobile device and to store the acceleration readings in the memory as at least a portion of the mobile device data;
perform high pass filtering on the received acceleration readings to obtain a high frequency component;
determine shaking energy associated with a swing motion of the mobile device from the high frequency component according to the following equation:

$$A_{energy} = A_{high} \times A^{T}_{high},$$

where $A_{energy}$ is a matrix representing the shaking energy, and $A_{high}$ is the high frequency component and $A^{T}_{high}$ is a transpose vector of the high frequency component, the swing motion of the mobile device being relative to a direction in which a user of the device is travelling; and

determine, based on the determined shaking energy, the direction in which the user is travelling as an angle relative to a given orientation.

10. The device of claim 9, wherein the processor is further configured to perform low pass filtering on the determined shaking energy to obtain smoothed data, the smoothed data being stored in the memory, and wherein the processor is configured to determine the direction in which the user is travelling by evaluating the smoothed data to identify a most likely direction of movement.

11. The device of any one of claim 9-10, wherein the mobile device includes a multi-axis accelerometer, and the processor is further configured to calibrate the multi-axis accelerometer prior to receiving the plurality of acceleration readings.

12. The device of claim 11, wherein the processor is configured to calibrate the multi-axis accelerometer by:

averaging acceleration readings from the multi-axis accelerometer over a selected time window;
computing biasing and scale factors by performing a cost function process using the average acceleration readings.

13. The device of any one of claims 9-12, the processor is configured to determine the direction in which the user is travelling by performing signal fusion using one or more signals generated by the mobile device and one or more external signals to eliminate alternative directions of movement.

14. The device of claim 13, wherein the primary direction of movement is used to provide at least one of a mapping application or directed advertisements to the user of the mobile device, and wherein the processor is configured to perform the signal fusion by evaluating wireless signals and map information associated with an indoor location.

15. A tangible, non-transitory computer program product on which computer readable instructions of a computer program are stored, the instructions, when executed by a processor, cause the processor to perform a method according to any one of claims 1 to 8.

**Patentansprüche**

1. Verfahren zum Bestimmen einer Bewegungsrichtung eines Benutzers eines Mobilgeräts, wobei das Verfahren umfasst:

Empfangen einer Vielzahl von Beschleunigungsmesswerten, die dem Mobilgerät zugeordnet sind;
Durchführen einer Hochpassfilterung auf den empfangenen Beschleunigungsmesswerten, um eine Hochfrequenzkomponente zu erlangen;
Bestimmen von Erschütterungsenergie, die einer Schwingungsbewegung des Mobilgeräts zugeordnet ist, aus der Hochfrequenzkomponente gemäß der folgenden Gleichung:

$$A_{energy} = A_{high} \times A^{T}_{high},$$

worin $A_{energy}$ eine Matrix ist, welche die Erschütterungsenergie darstellt, und $A_{high}$ die Hochfrequenzkomponente ist und $A^{T}_{high}$ ein transponierter Vektor der Hochfrequenzkomponente ist, wobei die Schwingungsbewegung des Mobilgeräts relativ zu einer Richtung ist, in welcher der Benutzer sich fortbewegt; und
auf der bestimmten Erschütterungsenergie beruhendes Bestimmen der Richtung, in welcher der Benutzer sich fortbewegt, als einen Winkel relativ zu einer gegebenen Ausrichtung.

2. Verfahren nach Anspruch 1, ferner umfassend: Durchführen einer Tiefpassfilterung auf der bestimmten Erschütterungsenergie, um geglättete Daten zu erlangen, worin das Bestimmen der Richtung, in welcher der Benutzer sich fortbewegt, einschließt: Bewerten der geglätteten Daten, um eine wahrscheinlichste Bewegungsrichtung zu ermitteln.

3. Verfahren nach einem der Ansprüche 1 bis 2, worin die Vielzahl von Beschleunigungsmesswerten unter Verwendung eines Gyroskops und eines Mehrachsen-Beschleunigungsmessers erzeugt wird.

4. Verfahren nach einem der Ansprüche 1 bis 3, ferner umfassend: Kalibrieren des Mehrachsen-Beschleunigungsmessers vor dem Empfangen der Vielzahl von Beschleunigungsmesswerten.

5. Verfahren nach Anspruch 4, worin das Kalibrieren des Mehrachsen-Beschleunigungsmessers einschließt:

   Mitteln von Beschleunigungsmesswerten vom Mehrachsen-Beschleunigungsmesser über ein ausgewähltes Zeitfenster; und
   Berechnen von Abweichungs- und Skalierungsfaktoren durch Durchführen eines Kostenfunktionsprozesses unter Verwendung der mittleren Beschleunigungsmesswerte.

6. Verfahren nach einem der Ansprüche 1 bis 5, worin die Hochfrequenzkomponente der Schwingungsenergie zugeordnet ist, die durch Bewegung des Mobilgeräts durch den Benutzer erzeugt wird.

7. Verfahren nach einem der Ansprüche 1 bis 6, worin $A_{energy}$ eine symmetrische 2×2-Matrix und $A_{high}$ ein Vektor ist, der die Hochfrequenzkomponente der empfangenen Beschleunigungsmesswerte entlang einer x- und einer y-Achse darstellt.

8. Verfahren nach einem der Ansprüche 1 bis 7, worin das Bestimmen der Richtung, in welcher der Benutzer sich fortbewegt, einschließt: Durchführen einer Signalfusion unter Verwendung von einem oder mehreren durch das Mobilgerät erzeugten Signalen und einem oder mehreren externen Signalen, um alternative Bewegungsrichtungen auszuschließen.

9. Gerät, umfassend:

   Speicher, der dafür konfiguriert ist, Mobilgerätedaten zu speichern; und
   einen mit dem Speicher gekoppelten Prozessor, wobei der Prozessor dafür konfiguriert ist:

   eine Vielzahl von Beschleunigungsmesswerten, die einem Mobilgerät zugeordnet sind, zu empfangen und die Beschleunigungsmesswerte als zumindest einen Teil der Mobilgerätedaten im Speicher zu speichern; eine Hochpassfilterung auf den empfangenen Beschleunigungsmesswerten durchzuführen, um eine Hochfrequenzkomponente zu erlangen;
   Erschütterungsenergie, die einer Schwingungsbewegung des Mobilgeräts zugeordnet ist, aus der Hochfrequenzkomponente gemäß der folgenden Gleichung zu bestimmen:

   $$A_{energy} = A_{high} \times A^{T}_{high},$$

   worin $A_{energy}$ eine Matrix ist, welche die Erschütterungsenergie darstellt, und $A_{high}$ die Hochfrequenzkomponente ist und $A^{T}_{high}$ ein transponierter Vektor der Hochfrequenzkomponente ist, wobei die Schwingungsbewegung des Mobilgeräts relativ zu einer Richtung ist, in welcher der Benutzer sich fortbewegt; und auf der Grundlage der bestimmten Erschütterungsenergie die Richtung, in welcher der Benutzer sich fortbewegt, als einen Winkel relativ zu einer gegebenen Ausrichtung zu bestimmen.

10. Gerät nach Anspruch 9, worin der Prozessor ferner dafür konfiguriert ist, eine Tiefpassfilterung auf der bestimmten Erschütterungsenergie durchzuführen, um geglättete Daten zu erlangen, wobei die geglätteten Daten im Speicher gespeichert werden, und worin der Prozessor dafür konfiguriert ist, durch Bewerten der geglätteten Daten, um eine wahrscheinlichste Bewegungsrichtung zu ermitteln, die Richtung zu bestimmen, in welcher der Benutzer sich fortbewegt.

11. Gerät nach einem der Ansprüche 9 bis 10, worin das Mobilgerät einen Mehrachsen-Beschleunigungsmesser einschließt und der Prozessor ferner dafür konfiguriert ist, den Mehrachsen-Beschleunigungsmesser vor dem Empfangen der Vielzahl von Beschleunigungsmesswerten zu kalibrieren.

12. Gerät nach Anspruch 11, worin der Prozessor dafür konfiguriert ist, den Mehrachsen-Beschleunigungsmesser zu kalibrieren durch:

   Mitteln von Beschleunigungsmesswerten vom Mehrachsen-Beschleunigungsmesser über ein ausgewähltes Zeitfenster; und

Berechnen von Abweichungs- und Skalierungsfaktoren durch Durchführen eines Kostenfunktionsprozesses unter Verwendung der mittleren Beschleunigungsmesswerte.

**13.** Gerät nach einem der Ansprüche 9 bis 12, wobei der Prozessor dafür konfiguriert ist, die Richtung zu bestimmen, in welcher der Benutzer sich fortbewegt, und zwar durch Durchführen einer Signalfusion unter Verwendung von einem oder mehreren durch das Mobilgerät erzeugten Signalen und einem oder mehreren externen Signalen, um alternative Bewegungsrichtungen auszuschließen.

**14.** Gerät nach Anspruch 13, worin die primäre Bewegungsrichtung verwendet wird, um dem Benutzer des Mobilgeräts mindestens eines von einer Kartenanwendung oder gerichteten Anzeigen bereitzustellen, und worin der Prozessor dafür konfiguriert ist, die Signalfusion durch Bewerten von drahtlosen Signalen und einem Innenraumstandort zugeordneter Karteninformationen durchzuführen.

**15.** Gegenständliches, nichtflüchtiges Computerprogrammprodukt, auf dem computerlesbare Anweisungen eines Computerprogramms gespeichert sind, wobei die Anweisungen, wenn sie durch einen Prozessor ausgeführt werden, den Prozessor veranlassen, ein Verfahren nach einem der Ansprüche 1 bis 8 durchzuführen.

## Revendications

**1.** Procédé de détermination d'une direction de déplacement d'un utilisateur d'un dispositif mobile, le procédé comportant les étapes ci-dessous consistant à :

recevoir une pluralité de mesures d'accélération associées au dispositif mobile ;

mettre en oeuvre un filtrage passe-haut sur les mesures d'accélération reçues, en vue d'obtenir une composante à haute fréquence ;

déterminer une énergie de tremblement associée à un mouvement de balancier du dispositif mobile à partir de la composante à haute fréquence, selon l'équation suivante :

$$A_{energy} = A_{high} \times A^{T}_{high}$$

où $A_{energy}$ est une matrice représentant l'énergie de tremblement, $A_{high}$ correspond à la composante à haute fréquence et $A^{T}_{high}$ correspond à un vecteur de transposée de la composante à haute fréquence, le mouvement de balancier du dispositif mobile étant relatif à une direction dans laquelle se déplace l'utilisateur ; et

déterminer, sur la base de l'énergie de tremblement déterminée, la direction dans laquelle se déplace l'utilisateur, en tant qu'un angle relativement à une orientation donnée.

**2.** Procédé selon la revendication 1, comportant en outre l'étape consistant à mettre en oeuvre un filtrage passe-bas sur l'énergie de tremblement déterminée, en vue d'obtenir des données lissées, dans lequel l'étape consistant à déterminer la direction dans laquelle se déplace l'utilisateur inclut l'étape consistant à évaluer les données lissées en vue d'identifier une direction de déplacement la plus probable.

**3.** Procédé selon l'une quelconque des revendications 1 à 2, dans lequel la pluralité de mesures d'accélération est générée en faisant appel à un gyroscope et à un accéléromètre multiaxial.

**4.** Procédé selon l'une quelconque des revendications 1 à 3, comportant en outre l'étape consistant à calibrer l'accéléromètre multiaxial avant de recevoir la pluralité de mesures d'accélération.

**5.** Procédé selon la revendication 4, dans lequel l'étape consistant à calibrer l'accéléromètre multiaxial inclut les étapes ci-dessous consistant à :

moyenner des mesures d'accélération en provenance de l'accéléromètre multiaxial sur une fenêtre temporelle sélectionnée ; et

calculer des facteurs de déviation et d'échelle en mettant en oeuvre un processus de fonction de coût en utilisant les mesures d'accélération moyennes.

**6.** Procédé selon l'une quelconque des revendications 1 à 5, dans lequel la composante à haute fréquence est associée à une énergie d'oscillation générée par le déplacement du dispositif mobile par l'utilisateur.

**7.** Procédé selon l'une quelconque des revendications 1 à 6, dans lequel $A_{energy}$ est une matrice symétrique 2x2 et $A_{high}$ est un vecteur représentant la composante à haute fréquence des mesures d'accélération reçues le long d'un axe des x et d'un axe des y.

**8.** Procédé selon l'une quelconque des revendications 1 à 7, dans lequel l'étape consistant à déterminer la direction dans laquelle se déplace l'utilisateur comporte l'étape consistant à mettre en oeuvre une fusion de signaux en utilisant un ou plusieurs signaux générés par le dispositif mobile et un ou plusieurs signaux externes pour éliminer des directions de déplacement alternatives.

**9.** Dispositif comportant :

une mémoire configurée de manière à stocker des données de dispositif mobile ; et
un processeur couplé à la mémoire, le processeur étant configuré de manière à :

recevoir une pluralité de mesures d'accélération associées à un dispositif mobile et stocker les mesures d'accélération dans la mémoire sous la forme d'au moins une partie des données de dispositif mobile ;
mettre en oeuvre un filtrage passe-haut sur les mesures d'accélération reçues, en vue d'obtenir une composante à haute fréquence ;
déterminer une énergie de tremblement associée à un mouvement de balancier du dispositif mobile à partir de la composante à haute fréquence, selon l'équation suivante :

$$A_{energy} = A_{high} \times A^{T}_{high}$$

où $A_{energy}$ est une matrice représentant l'énergie de tremblement, $A_{high}$ correspond à la composante à haute fréquence et $A^{T}_{high}$ correspond à un vecteur de transposée de la composante à haute fréquence, le mouvement de balancier du dispositif mobile étant relatif à une direction dans laquelle se déplace l'utilisateur ; et
déterminer, sur la base de l'énergie de tremblement déterminée, la direction dans laquelle se déplace l'utilisateur, en tant qu'un angle relativement à une orientation donnée.

**10.** Dispositif selon la revendication 9, dans lequel le processeur est en outre configuré de manière à mettre en oeuvre un filtrage passe-bas sur l'énergie de tremblement déterminée, en vue d'obtenir des données lissées, les données lissées étant stockées dans la mémoire, et dans lequel le processeur est configuré de manière à déterminer la direction dans laquelle se déplace l'utilisateur en évaluant les données lissées afin d'identifier une direction de déplacement la plus probable.

**11.** Dispositif selon l'une quelconque des revendications 9 à 10, dans lequel le dispositif mobile inclut un accéléromètre multiaxial, et dans lequel le processeur est en outre configuré de manière à calibrer l'accéléromètre multiaxial avant de recevoir la pluralité de mesures d'accélération.

**12.** Dispositif selon la revendication 11, dans lequel le processeur est configuré de manière à calibrer l'accéléromètre multiaxial :

en moyennant des mesures d'accélération en provenance de l'accéléromètre multiaxial sur une fenêtre temporelle sélectionnée ;
en calculant des facteurs de déviation et d'échelle en mettant en oeuvre un processus de fonction de coût en utilisant les mesures d'accélération moyennes.

**13.** Dispositif selon l'une quelconque des revendications 9 à 12, dans lequel le processeur est configuré de manière à déterminer la direction dans laquelle se déplace l'utilisateur en mettant en oeuvre une fusion de signaux en utilisant un ou plusieurs signaux générés par le dispositif mobile et un ou plusieurs signaux externes pour éliminer des directions de déplacement alternatives.

**14.** Dispositif selon la revendication 13, dans lequel la direction de déplacement principale est utilisée en vue de fournir au moins l'une parmi une application de mise en correspondance ou des annonces dirigées vers l'utilisateur du dispositif mobile, et dans lequel le processeur est configuré de manière à mettre en oeuvre la fusion de signaux en évaluant des signaux sans fil et des informations de carte associées à un emplacement intérieur.

**15.** Produit-programme informatique tangible et non transitoire sur lequel sont stockées des instructions lisibles par ordinateur d'un programme informatique, dans lequel les instructions, lorsqu'elles sont exécutées par un processeur, amènent le processeur à mettre en oeuvre un procédé selon l'une quelconque des revendications 1 à 8.

102 — Server
106 — Processor

108 — Memory
110 — Instructions

112 — Data

114 — Map Information

Client Device — 104

100

Network — 116

Client Device — 104

118 — Processor

120 — Memory
122 — Instructions

124 — Data
146 — Time-Indexed Log
Sensor calibration data — 148

126 — Display          GPS Receiver — 130
128 — User input
132 — Onboard Sensors
134 — Gyroscope      Step-counter — 140
136 — Accelerometer   Magnetic Field — 142
138 — Compass         Thermometer — 144

FIG. 1

FIG.2

FIG. 3

400

402

Shaking
Movement

404

Direction of Movement

408

Translational Movement

406

FIG. 4A

FIG. 4B

FIG. 5

FIG. 6A

FIG. 6B

FIG. 6C

FIG. 7A

FIG. 7B

FIG. 7C

FIG. 8A

FIG. 8B

FIG. 8C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004064286 A
- US 2011054834 A

**Non-patent literature cited in the description**

- **CONSTANDACHE et al.** Towards Mobile Phone Localization Without War-Driving. *Proceedings of IN-FOCOM 2010,* 1-9